# EUROPEAN PATENT SPECIFICATION

(11) **EP 1 195 051 B1**
(45) Date of publication and mention of the grant of the patent: **08.12.2004**
(21) Application number: 00953036.1
(22) Date of filing: 12.07.2000
(51) Int. Cl.: H04N 5/00

(54) **METHOD AND DEVICE FOR ESTABLISHING A COMMUNICATION**
VERFAHREN UND VORRICHTUNG ZUM KOMMUNIKATIONSAUFBAU
PROCEDE ET DISPOSITIF D'ETABLISSEMENT D'UNE COMMUNICATION

(30) Priority: 12.07.1999 EP 99401752
(43) Date of publication of application: 10.04.2002
(73) Proprietor: Thomson Licensing S.A., 92100 Boulogne-Billancourt (FR)
(72) Inventor: Letellier, Philippe Thomson Multimedia, 92648 Boulogne (FR)
(74) Representative: Kohrs, Martin
(86) International application number: PCT/EP2000/006634
(87) International publication number: WO 2001/005142

(56) References cited:
- EP-A- 0 660 605
- EP-A- 0 852 361
- EP-A- 0 854 645
- WO-A-96/33562
- US-A- 5 835 087

## Description

### FIELD OF THE INVENTION

The invention concerns a method for establishing a communication between users connected to a communication network, especially in the frame of an interactive television system. It also concerns a server device for establishing the communication and terminals interacting with the users.

### BACKGROUND

Two popular forms of communication involve the telephone set on one hand and the Internet on the other. In order to use a telephone to communicate with somebody, the user has to know the appropriate telephone number to access the right person. Another type of communication consists in participating in Internet chat groups. A chat group may be identified by a theme or a given topic, and communication takes place with people who are already connected.

Known television receivers, for example digital satellite decoders, generally have only a limited communication capacity, since their primary function is to be a media player. In the last years, a return channel has been added, for example under the form of a modem linked to the public telephone network, but this link was used less for inter-user communication than for data communication to a service provider.
The invention concerns a new communication concept, particularly adapted to the television environment.

### SUMMARY OF THE INVENTION

To that end, the invention relates to a method for establishing communications in a system comprising at least two television receiver terminals and a server linked to said television receiver terminals by a network comprising the steps of :
- watching a television program;
- sending, by a first user of a first television receiver terminal, of data to said server, said data being relative to the program watched by the said user on said terminal and informing said server that said first user wishes to communicate with another user;
- searching by the server for at least another user who sent data informing the server that he is watching the same television program;
- based on data relative to said other users matching the data of the first user, selecting at least a second user among said others users ; and
- establishing a communication between said first user and said at least one other user through the server, the address of a user is not transmitted to any other user.

With this solution, an end device offers to a user the possibility to be connected to another user in a new fashion. For example, the user can browse in his Electronic Program Guide (EPG) to find an interesting program. He then zaps onto the corresponding service. If he wants to communicate with someone interested in the same program, the system in the server connects him to someone watching this same program or a program with the same topic. An advantage of the present invention is that the connected users do not necessarily need to know their respective identities, i.e. the chat may remain anonymous.
Data relating to a user sent to the server may include information describing the program watched by the user and/or user profile information entered by the user or derived from an analysis of his past interactions with the end device, such as an analysis of the programs watched in the past.

Another object of the invention is a server device adapted for establishing communications between at least two users, said device being linked to at least two television receiver terminals; said server device comprising :
- means adapted for receiving from the two users data relative to a respective program watched by each user through their respective television receivers,
- means adapted for storing said data sent by users through said television receiver terminals, as well as addresses of said users,
- means adapted for establishing a communication between at least the two users with matching data, using said user addresses ; the communication being established through the server, the address of a user is not transmitted to any other user.

### BRIEF DESCRIPTION OF THE DRAWINGS

Other characteristics and advantages of the invention will appear through the description of a non-limiting embodiment of the invention, described with the help of the enclosed drawings among which :
Figure 1 is a block diagram of the generic architecture of the proposed invention.
Figure 2 is a temporal diagram of the messages exchanged between two users and the server.

### DETAILED DESCRIPTION

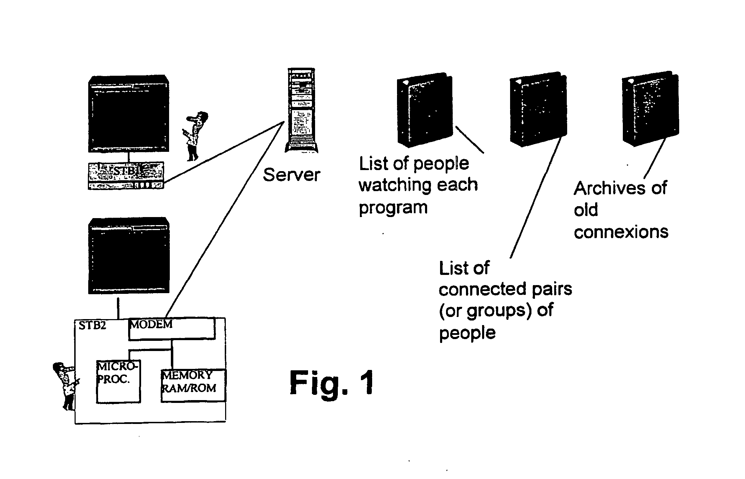

Figure 1 gives a view of the architecture of the system. Television receiver terminals, such as DVB terminals, are deployed with a return channel, for example a modem connected to the Public Switched Telephone Network. The terminals are connected through the network to a server. The server establishes connections between two or more users, as will be described below. In this context, a connection between users is a communication link for exchanging data, vocally or otherwise, between the connected users.
The server manages and updates a database of information relative to users requesting a connection, to current connections between users and to past connections between users.
The database contains the following data, updated in real time:
(a) A list of users requesting a connection, along with the following information for each user;
   - A user identification, billing address
   - Identification of a program currently watched by a user
   - Profile of the user (Sex, age, preferred topics...)
   - An address (such as a telephone number or an email address or an IP address or any other type of address) required to establish a connection with the user
   - ...
(b) A list of current connections, and for each connection the group of connected users
(c) An archive of data relating to past connections, along with the following data for each connection:
   - A unique connection reference "Id",
      List of users having participated in a communication in the past, along with the information given in (a)above.
   - Statistics relating to the connection: The time of the beginning and ending of the connection...

A User Interface is running on each terminal. This user interface has the following functions:
- Profile definition menu of the user (sex, age, connection name, preferences, etc ...);
- Connection request menu, to inform the server of the user's wish to be connected to someone;
- Zapping mode, for switching between programs ;
- Function to stop a connection;
- Function to reestablish a connection, with the connection Id of the past connection as a parameter, to request the server to set up again a previous connection ;
- Menu to accept or reject a request for a connection coming form the server to set up again a previous connection ;
- A connection Id browser to obtain information on a connection description, to enable the user to reestablish a former connection ;
- Function to request deletion of a connection Id in the server's archives to eliminate a past connection involving a user who does not want such a connection to be reestablished.

According to the present embodiment, a connection is set up between two users. Nevertheless, if is of course possible to connect a greater number of users.
A connection is established through the server, using the modems. The connection may be vocal, i.e. the user's voice is compressed by the receiver using standard software and sent over the telephone line to the other user's receiver for decompression, or may be in the form of an on-screen chat, if proper means for entering characters (i.e. a keyboard) are available.

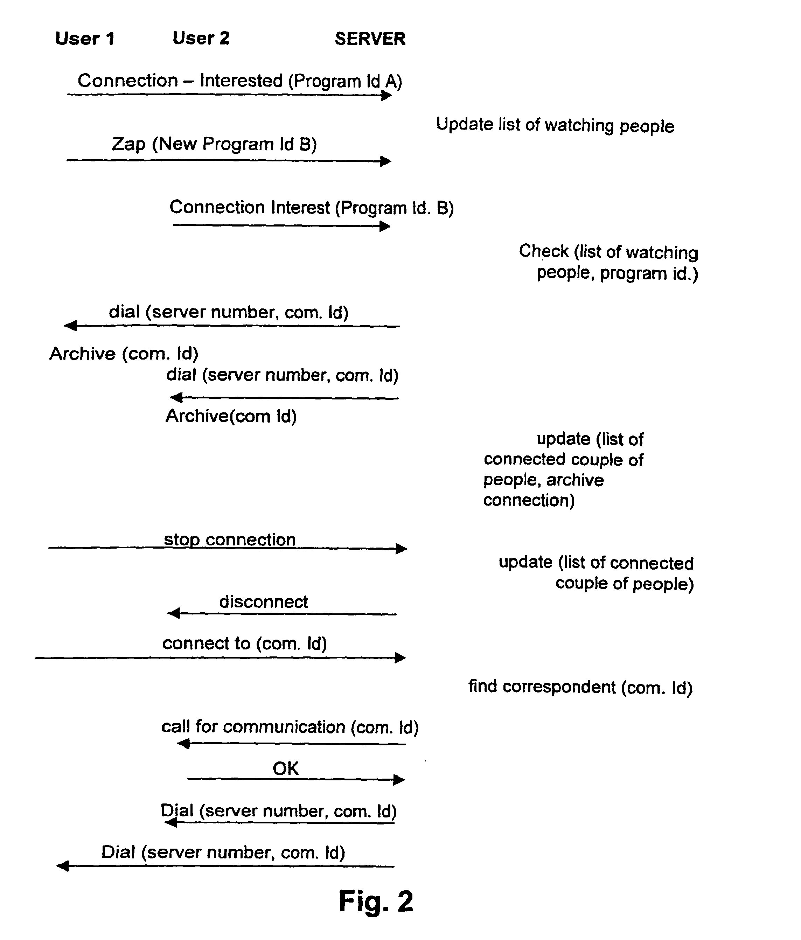

A potential dynamic behavior (see figure 2) of the system is: A user 1 is watching television channel A. He calls the server to ask for a connection with someone watching the same content. The receiver of this user sends to the server the user related data identified at (a) above. The server adds a new field to its list of people interested by a connection. While waiting for his connection, the user 1 zaps from channel A to channel B. The terminal sends automatically a message to the server to update the program Id watched by the user. The server updates its data relating to user 1. When the server finds another user with the adequate characteristics, it connects the user 1 and the user 2 for an audio conference. The user's address is not transmitted to the other user: unless the users decide to exchange their addresses, they stay anonymous. The server updates its list of connected users with a unique connection Id designating the new connection. The user 1 and user 2 terminals archive the connection Id for a potential future reconnection. The user 1 and user 2 are able to discuss together directly, as during a telephone communication. When one of the users wants to stop the communication, he interacts with the terminal's user interface. The terminal sends a message to the server to stop the connection. The server sends a disconnection message to the different users and closes the connection.

Another potential dynamic behavior, illustrated by the lower part of figure 2 is: following the previous connection, the user 2 wants to communicate again with user 1. User 1 refused to give him his direct phone number during the previous connection. User 2 browses through the previous connection Id list and selects the appropriate Id.
The terminal sends a message to the server and transfers the connection Id. The server extracts from the connection archives the different parameters to set up the connection. It sends a message to the user 1 terminal to request a connection set up. If the user 1 refuses the connection or if he is not available, the server sends to user 2 a message indicating the connection request has been rejected. If the user 1 accepts the connection, the server sets up the connection between the two users.
According to a variant embodiment, in case of absence of a user (e.g. the user's receiver is in stand-by mode), the server leaves an email message informing the user of the failed connection request.

An important advantage of the invention is that the connection is managed anonymously by the server. It means the user phone numbers or addresses are known exclusively to the server. This is an important protection for the users.

The network used in the system can be a low bandwidth network, such as the public switched telephone network, but can be also the cable return channel.

The invention is independent of the communication protocol used between the terminals and the server.

The terminal can be a television set connected to a digital satellite set top box with a return channel based on the phone line. The remote control can be equipped with a microphone and an HF connection to the set top box to transmit the voice signal. This voice signal is sampled in the set top box. The user interface of the set top box is extended with the functionality defined above. The user can access a corresponding menu by activating a button on the screen of the television set. The terminal also comprises a microprocessor for executing a software program for handling user interaction and the communication protocol with the server.

The invention can be adapted to other environments by the Man Skilled in the Art, in particular video game consoles. If the network is small the server functionality can be handled by one terminal playing the server role. The server can measure the time of connection to bill the service based on the duration of a connection. The communication can be set up between more than 2 users. The system can be enhanced using videophones or Webcams rather than a pure audio connection. The user profile can be used as an element to choose the most adequate user among the users watching a given target program.

## Claims

1. Method for establishing communications in a system comprising at least two television receiver terminals and a server linked to said television receiver terminals by a network comprising the steps of :
- watching a television program;
- sending, by a first user of a first television receiver terminal, of data to said server, said data being relative to the program watched by the said user on said terminal and informing said server that said first user wishes to communicate with another user;
- searching by the server for at least another user who sent data informing the server that he is watching the same television program;
- based on data relative to said other users matching the data of the first user, selecting at least a second user among said others users ; and
- establishing a communication between said first user and said at least one other user through the server, the address of a user is not transmitted to any other user.

2. Method according to the claim 1 comprising :
- a step of sending a stopping signal from a television receiver terminal of an user to the server ;
- a step of sending a disconnection signal from the server to the other users communicating with the first user ; and further to the communication,
- a step of storing in the server a list comprising user identifications ;
- a step of archiving in the terminal a connection reference relative to the communication.

3. Method according to the claim 2, comprising the step of re-establishing a communication between at least the two of these users following a request of one of the users, the step of re-establishing comprising the following steps :
- sending by one of the users to the server the connection reference ;
- searching in the server the list of users corresponding to said connection reference ;
- establishing a communication between this user and another user of this list.

4. Server device adapted for establishing communications between at least two users, said device being linked to at least two television receiver terminals; said server device comprising :
- means adapted for receiving from the two users data relative to a respective program watched by each user through their respective television receivers,
- means adapted for storing said data sent by users through said television receiver terminals, as well as addresses of said users,
- means adapted for establishing a communication between at least the two users with matching data, using said user addresses ; the communication being established through the server, the address of a user is not transmitted to any other user.

5. Server device according to claim 4, further comprising a memory means adapted for storing at least a list of users' identifications and a connection reference relative to a previous communication, and communication means adapted to re-establish a communication between at least two users of the list when it receive from one of these users a request for re-establishing a communication, said request comprising the connection reference.

6. Server device according to claim 4 or 5, comprising a memory containing the addresses of the users of a list, the users' address is not transmitted to the other user.

7. Television receiver terminal adapted for the implementation of the method according to any of the claim 4 to 6, wherein it comprises communication means adapted to establish said communication over a telephone network, said communication between the two users being by audio.

## Patentansprüche

1. Verfahren zum Aufbau von Kommunikationen in einem System mit wenigstens zwei Fernsehempfänger-Terminals und einem Server, der mit den Fernsehempfänger-Terminals über ein Netz verbunden ist, mit folgenden Schritten:
- Betrachtung eines Fernsehprogramms,
- Senden durch einen ersten Benutzer eines ersten Femsehempfänger-Terminals von Daten zu dem Server, wobei diese Daten zu dem Programm gehören, das durch den Benutzer auf dem Terminal betrachtet wird, und Informieren des Servers, dass der erste Benutzer mit einem anderen Benutzer kommunizieren möchte,
- Suche durch den Server nach wenigstens einem anderen Benutzer, der Daten gesendet hat, die den Server informieren, dass er dasselbe Femsehprogramm betrachtet,
- auf der Grundlage von Daten für die anderen Benutzer, die an die Daten des ersten Benutzers angepasst sind, Wahl wenigstens eines zweiten Benutzers unter den anderen Benutzern und
- Aufbau einer Kommunikation zwischen dem ersten Benutzer und dem wenigsten einem anderen Benutzer über dem Server, wobei die Adresse eines Benutzers nicht zu einem anderen Benutzer übertragen wird.

2. Verfahren nach Anspruch 1 mit:
- einem Schritt zur Sendung eines Stoppsignals von einem Fernsehempfänger-Terminal eines Benutzers zu dem Server,
- einem Schritt zur Sendung eines Trennsignals von dem Server zu den anderen Benutzern, die mit dem ersten Benutzer kommunizieren, und zusätzlich zu der Kommunikation
- einem Schritt zur Speicherung einer Liste in dem Server, die Benutzeridentifikationen enthält,
- einem Schritt zur Archivierung einer Verbindungsreferenz für die Kommunikation in dem Terminal.

3. Verfahren nach Anspruch 2 mit dem Schritt des Neuaufbaus einer Kommunikation zwischen wenigstens zwei dieser Benutzer, folgend auf eine Anforderung eines der Benutzer, wobei der Schritt des Neuaufbaus die folgenden Schritte enthält:
- Senden der Verbindungsreferenz durch einen der Benutzer zu dem Server,
- Suchen in dem Server nach einer Liste von Benutzem für diese Verbindungsreferenz,
- Aufbau einer Kommunikation zwischen diesem Benutzer und einem anderen Benutzer dieser Liste.

4. Servervorrichtung für den Aufbau von Kommunikationen zwischen wenigstens zwei Benutzern, und diese Vorrichtung mit wenigstens zwei Femsehempfänger-Terminals verbunden ist, wobei die Servervorrichtung Folgendes enthält:
- Mittel zum Empfang von den beiden Benutzem von Daten für ein bestimmtes Programm, das durch den Benutzer betrachtet wird, über ihre jeweiligen Fernsehempfänger,
- Mittel zur Speicherung der durch die Benutzer gesendeten Daten über die Fernsehempfänger-Terminals sowie der Adressen der Benutzer,
- Mittel zum Aufbau einer Kommunikation zwischen wenigstens zwei Benutzern mit übereinstimmenden Daten unter Anwendung der Benutzeradressen, wobei dann, wenn die Kommunikation durch den Server aufgebaut worden ist, die Adresse eines Benutzers nicht zu einem anderen Benutzer übertragen wird.

5. Servervorrichtung nach Anspruch 4 mit Speichermitteln zur Speicherung von wenigstens einer Liste von Identifikationen der Benutzer und einer entsprechenden Referenz für die vorangehende Kommunikation und Kommunikationsmittel zum Neuaufbau einer Kommunikation zwischen wenigstens zwei Benutzern der Liste, wenn sie von einem dieser Benutzer eine Anforderung zum Neuaufbau einer Kommunikation empfängt, wobei die Anforderung die Anschlussreferenz enthält.

6. Servervorrichtung nach Anspruch 4 oder 5 mit einem Speicher, der die Adressen der Benutzer einer Liste enthält, wobei die Adresse der Benutzer nicht zu dem anderen übertragen wird.

7. Fernsehempfänger-Terminal für die Durchführung des Verfahrens nach einem der Ansprüche 4 bis 6, wobei es Kommunikationsmittel enthält zum Aufbau der Kommunikation über ein Telefonnetz, und die Kommunikation zwischen den beiden Benutzern durch Audio erfolgt.

## Revendications

1. Procédé d'établissement de communications dans un système composé d'au moins deux terminaux récepteurs de télévision et d'un serveur relié auxdits terminaux récepteurs de télévision par un réseau, comprenant les étapes :
- de visualisation d'un programme de télévision ;
- d'envoi, par un premier utilisateur d'un premier terminal récepteur de télévision, de données audit serveur, lesdites données se rapportant au programme visualisé par ledit utilisateur sur ledit terminal et informant ledit serveur que ledit premier utilisateur souhaite communiquer avec un autre utilisateur ;
- de recherche par le serveur d'au moins un autre utilisateur qui a envoyé des données informant le serveur qu'il visualise le même programme de télévision ;
- de sélection, en fonction des données relatives auxdits autres utilisateurs correspondant aux données du premier utilisateur, d'au moins un second utilisateur parmi lesdits autres utilisateurs ; et
- d'établissement d'une communication entre ledit premier utilisateur et au moins undit autre utilisateur via le serveur, l'adresse d'un utilisateur n'étant pas transmise à un autre utilisateur.

2. Procédé selon la revendication 1, comprenant :
- une étape d'envoi d'un signal d'arrêt provenant d'un terminal récepteur de télévision d'un utilisateur vers le serveur ;
- une étape d'envoi d'un signal de déconnexion du serveur vers les autres utilisateurs communiquant avec le premier utilisateur ; et suite à la communication,
- une étape de stockage dans le serveur d'une liste comprenant les identifications utilisateur ;
- une étape d'archivage dans le terminal d'une référence de connexion relative à la communication.

3. Procédé selon la revendication 2, composé de l'étape de rétablissement d'une communication entre au moins les deux de ces utilisateurs après une demande d'un des utilisateurs, l'étape de rétablissement comprenant les étapes suivantes :
- envoi par l'un des utilisateurs vers le serveur de la référence de connexion ;
- recherche, dans le serveur, de la liste d'utilisateurs correspondant à ladite référence de connexion ;
- établissement d'une communication entre cet utilisateur et un autre utilisateur de cette liste.

4. Serveur adapté pour établir des communications entre au moins deux utilisateurs, ledit dispositif étant relié à au moins deux terminaux de réception de télévision, ledit serveur étant composé :
- de moyens adaptés pour recevoir des deux utilisateurs des données relatives à un programme respectif visualisé par chaque utilisateur via leurs récepteurs de télévision respectifs,
- de moyens adaptés pour stocker lesdites données envoyées par les utilisateurs via lesdits terminaux récepteurs de télévision, ainsi que les adresses desdits utilisateurs,
- de moyens adaptés pour établir une communication entre au moins les deux utilisateurs avec des données correspondantes, à l'aide desdites adresses des utilisateurs; la communication étant établie via le serveur, l'adresse d'un utilisateur n'est pas transmise à un autre utilisateur.

5. Serveur selon la revendication 4, comprenant en outre des moyens de mémorisation adaptés pour stocker au moins une liste d'identifications d'utilisateurs et une référence de connexion relative à une communication précédente, et des moyens de communication adaptés pour rétablir une communication entre au moins deux utilisateurs de la liste lorsqu'il reçoit de l'un de ces utilisateurs une demande de rétablissement d'une communication, ladite demande comprenant la référence de connexion.

6. Serveur selon la revendication 4 ou 5, comprenant une mémoire contenant les adresses des utilisateurs d'une liste, l'adresse de l'utilisateur n'étant pas transmise à l'autre utilisateur.

7. Terminal récepteur de télévision adapté pour l'implémentation du procédé selon l'une quelconque des revendications 4 à 6, dans lequel sont compris des moyens de communication adaptés pour établir ladite communication sur un réseau téléphonique, ladite communication entre les deux utilisateurs s'effectuant par audio.
